(19) Europäisches Patentamt
European Patent Office
Office européen des brevets

(11) **EP 4 775 437 A1**

(12) **EUROPEAN PATENT APPLICATION**

(43) Date of publication:
**15.07.2026 Bulletin 2026/29**

(21) Application number: **25151437.8**

(22) Date of filing: **13.01.2025**

(51) International Patent Classification (IPC):
**B60L 50/51** $^{(2019.01)}$  **B60L 58/20** $^{(2019.01)}$
**H02J 7/34** $^{(2006.01)}$

(52) Cooperative Patent Classification (CPC):
**B60L 50/51; B60L 58/20; H02J 7/345;**
**H02M 3/33584; H02M 7/48;** B60L 2210/10;
B60L 2210/40; B60L 2270/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Penta Corporation**
**405 08 Göteborg (SE)**

(72) Inventors:
• **Kersten, Anton**
**433 42 Partille (SE)**

• **Dwarakanath, Shreyas**
**412 75 Göteborg (SE)**
• **Rajendran, Udhayaraj**
**414 82 Göteborg (SE)**
• **Ahmad, Waquas**
**461 65 Trollhättan (SE)**
• **Lundvall, Anna**
**417 28 Göteborg (SE)**

(74) Representative: **Valea AB**
**Box 1098**
**405 23 Göteborg (SE)**

Remarks:
Amended claims in accordance with Rule 137(2) EPC.

(54) **POWER SYSTEM WITH PRE-CHARGING AND ACTIVE DISCHARGING FUNCTIONS**

(57)     A power system (200, 300) comprises at least one battery pack (210) comprising at least one battery cell, a DC link capacitor (220), a DC/AC converter (230), a DC/DC converter (240). The power system (200, 300) is configured to pre-charge the DC link capacitor (220) to a desired DC link voltage level by the DC/DC converter (240) or by the DC/AC converter (230).

Fig. 3

EP 4 775 437 A1

## Description

## TECHNICAL FIELD

The disclosure relates generally to a power system. In particular aspects, the disclosure relates to a power system with pre-charging and active discharging functions. The disclosure can be applied to any power systems and vehicles using electrical energy storage systems, such as heavy-duty vehicles, e.g. trucks, buses, and construction equipment, among other vehicle types. Although the disclosure may be described with respect to a particular vehicle, the disclosure is not restricted to any particular vehicle.

## BACKGROUND

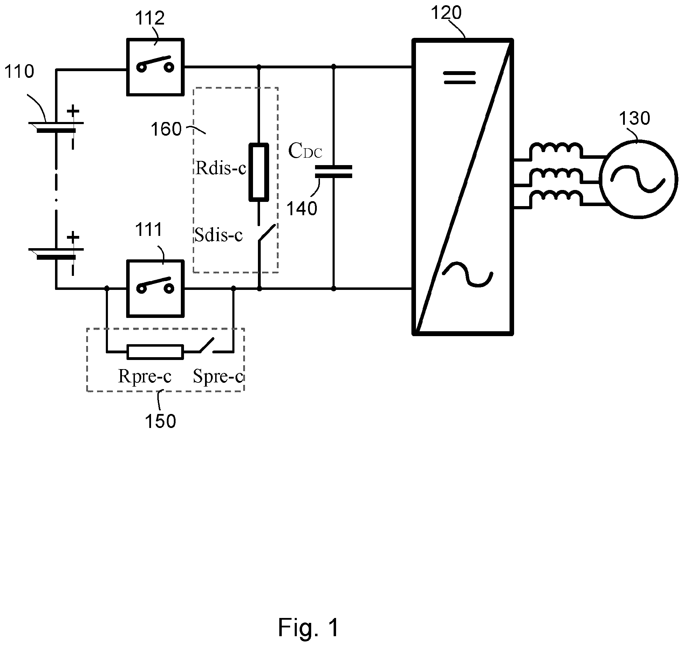

In power systems of electric vehicles (EVs), pre-charging is a process used to safely energize the high-voltage electrical system and components, especially before connecting the main battery pack to the rest of the power system. EVs typically operate at high voltages, e.g., 400V or 800V. Connecting these voltages to components with uncharged capacitors can cause a sudden spike in current. Pre-charging ensures that an inrush of current, i.e. a surge of electrical power, to capacitors and other components in the power system is controlled, preventing potential damage or stress to the power system. Controlled pre-charging ensures that the entire power system is brought to operational voltage gradually, avoiding any electrical instability. **Fig.1** shows a power system in an electric vehicle. The power system comprises a battery pack **110,** an inverter **120,** an electric motor **130** and a DC-link capacitance $C_{DC}$ **140,** i.e. the traction voltage bus capacitance. The power system further comprises a pre-charging circuit **150** comprises a resistor **Rpre-c** and a relay **Spre-c.** When the vehicle is turned on, the pre-charge relay Spre-c closes before the main contactors **111, 112.** The resistor Rpre-c limits the current flow, gradually charging the capacitor $C_{DC}$ 140 to a safe voltage level. Once the system voltage reaches an acceptable threshold, e.g., 90-95% of the battery voltage, the main contactor 111, 112 closes, bypassing the pre-charge resistor Rpre-c and enabling full power delivery to the rest of components. The time constant for pre-charging is dependent on the selected resistance of Rpre-c and the DC link capacitance $C_{DC}$ 140. A time limit is usually set so that the resistor Rpre-c is not overheated, which limits the maximum capacitance to be pre-charged. If the pre-charging time is too short, the capacitor $C_{DC}$ 140 is stressed with a time voltage derivatives, which might harm the insulation of the capacitor $C_{DC}$ 140.

Under certain circumstances, the DC-link capacitance needs to be actively discharged. For this purpose, a discharging circuit **160** comprising a resistor **Rdis-c** and a relay **Sdis-c** may be connected in series to the DC capacitance $C_{DC}$ 140. During dis-charging, the main contactors 111, 112 are opened and the discharge resistor Rdis-c is connected in series to $C_{DC}$ 140. This is an important safety feature, as it is also dis-charging Y capacitors used as safety capacitor in electrical and electronic circuits to reduce common-mode noise, i.e. unwanted interference that appears equally on the circuit's live and neutral bus lines relative to ground. The drawback of this approach is the increased component count and the heat power dissipation in the resistance, which is related to the discharge rate.

Current solutions for pre-charging and dis-charging cannot be scaled for EVs with large multi-battery systems and multi-motor systems. A power system with improved pre-charging and dis-charging functions for various EVs is needed.

## SUMMARY

According to a first aspect of the disclosure, a power system with pre-charging and dis-charging functions is provided. The power system comprises at least one battery pack comprising at least one battery cell for providing power supply to an alternating current (AC) power system or a traction system. The power system comprises a direct current to alternating current (DC/AC) converter. The DC/AC converter is connected to the traction system or to the AC power system via a first contactor and a pre-charge circuit comprising a second contactor and a resistor. The power system further comprises a DC link capacitor connected in parallel to the at least one battery pack via a pair of third contactors. The power system further comprises a direct current to direct current (DC/DC) converter. The outputs of the DC/DC converter are connected to the DC link capacitor, inputs of the DC/DC converter are connected to a battery. The power system is configured to pre-charge the DC link capacitor to a desired DC link voltage level by the DC/DC converter or by the AC power system via the DC/AC converter and the pre-charge circuit.

The first aspect of the disclosure may seek to provide a power system with improved pre-charging functions for various power systems. A technical benefit may include providing a power system with improved pre-charging function where charge rate may be actively controlled without overheating limitations as for the existing solutions as well as preventing too quick charging rates when having a too low capacitance in the DC link. No additional hardware is needed and the pre-charging function may be integrated as a software function if a bidirectional DC/DC converter is already utilized in the system. The power system may be scaled for EVs with large multi-battery system and large multi-motor system.

Optionally in some examples, including in at least one preferred example, the power system may be configured to discharge the DC link capacitor via the DC/DC converter. A technical benefit may include providing a power system with improved discharging function where discharge rate may be actively controlled. No additional hardware is needed for discharge and the discharging function may be integrated as a software function if a bidirectional DC/DC converter is already utilized in the system.

Optionally in some examples, including in at least one preferred example, the DC/DC converter may be a unidirectional or bidirectional converter. A technical benefit may include providing a DC/DC converter which can act as a pre-charging and dis-charging circuit, no additional hardware is needed, and pre-charging and dis-charging functions may be integrated as a software function if a bidirectional DC/DC converter is already utilized in the system.

Optionally in some examples, including in at least one preferred example, the power system may be further configured to actively adjust the DC link voltage level by controlling discharging of the capacitor via the DC/DC converter. A technical benefit may include providing a power system that has adjustable DC link voltage level depending on different DC link voltage level requirements with various power system applications.

Optionally in some examples, including in at least one preferred example, the power system may be further configured to operate the DC/AC converter in boost mode. A technical benefit may include providing a power system when higher DC link voltage level is needed than the peak voltage level of the AC power system so the DC link capacitor can be charged by the DC/AC converter to the desired voltage level.

Optionally in some examples, including in at least one preferred example, the power system may be further configured to control charging and discharging rate of the DC link capacitor. A technical benefit may include providing a power system where charge and discharge rate may be actively controlled without overheating limitations as for the existing solutions as well as preventing too quick charging rates when having a too low capacitance in the DC link.

Optionally in some examples, including in at least one preferred example, the power system may be implemented in a renewable energy system, or a high-voltage direct current (HVDC) transmission system, or an electrical energy storage system. A technical benefit may include providing a power system with improved pre-charging and discharging functions for various power systems.

Optionally in some examples, including in at least one preferred example, the power system may be implemented in a motor drive system of a vehicle. A technical benefit may include providing a power system with improved pre-charging and discharging functions for EVs compared to the existing solutions.

According to a second aspect of the disclosure, a vehicle comprises a power system with pre-charging and active discharging functions of the first aspect is provided. The power system may be implemented in a motor drive system of the vehicle. The second aspect of the disclosure may seek to provide a vehicle which is safer, robust, cheaper, efficient and flexible compared to the existing solutions. A technical benefit may include providing a safer, robust, cheaper, efficient and flexible vehicle thanks to the power system which has improved pre-charging and discharging functions.

According to a third aspect of the disclosure, a method for operating the power system of the first aspect is provided. The method comprises pre-charging the DC link capacitor to a desired DC link voltage level by the DC/DC converter or by the AC power system via the DC/AC converter and pre-charge circuit.

The third aspect of the disclosure may seek to provide an improved method for pre-charging and discharging the DC link capacitor in the power system. A technical benefit may include providing an improved pre-charging and discharging method for the DC link capacitor in the power system where the pre-charge and discharge rate may be actively controlled, and the DC link voltage level is actively adjustable. No additional hardware is needed for discharge and the method may be implemented as a software function if a bidirectional DC/DC converter is already utilized in the power system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is an exemplary power system in a vehicle according to some prior art examples.
FIG. 2 (a) and (b) are exemplary power systems with a DC/DC converter for pre-charging and dis-charging according to some examples.
FIG. 3 is an exemplary power system with a pre-charging circuit according to some examples.
FIG. 4 is a flow chart showing a method for operating a power system according to an example.
FIG. 5 is an exemplary vehicle comprising a power system according to an example.
FIG. 6 is a block diagram showing a computer system according to an example.

## DETAILED DESCRIPTION

The detailed description set forth below provides information and examples of the disclosed technology with sufficient detail to enable those skilled in the art to practice the disclosure.

As discussed in the background, pre-charging is a process used to safely energize the high-voltage electrical system and components in the power system of EV, especially before connecting the main battery pack to the rest of the power system. The pre-charging is usually performed by the main battery pack. A battery usually allows pre-charging for a limited number of times, e.g. 4 times in a row with a break of e.g. 5 seconds between each attempt. After the 4th attempt, the battery prevents enabling pre-charge in case of a thermal overload on the pre-charge circuit until the pre-charge circuit cools down. This limits the capacitance to be pre-charged. If the pre-charge time is too short, the capacitors are stressed with a time voltage derivatives, which might harm the insulation of the capacitors. There are requirements that need to be addressed such as pre-charging rate, minimum pre-charge time etc., so that the components are not stressed with too fast in-rush currents. Multiple battery packs, e.g. up to 6 battery packs, may be connected in parallel to one traction voltage bus in an EV. Each battery pack may have a pre-charger but a max of two pre-chargers can be used simultaneously. Current solutions for pre-charging and dis-charging cannot be scaled for EVs with large multi-battery systems and multi-motor systems. This disclosure provided a power system with improved pre-charging and dis-charging solutions for various power systems.

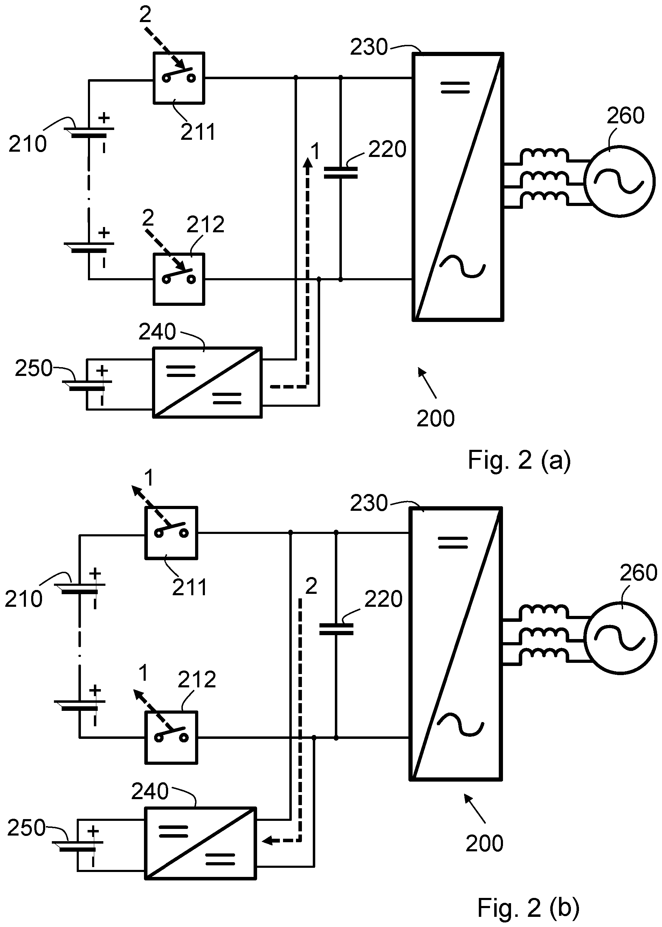

**FIG. 2 (a)** depicts a power system **200** with a DC/DC converter for pre-charging. The power system 200 comprises at least one battery pack **210** comprising one or more battery cells. The power system 200 further comprises a DC-link capacitor **220,** an inverter, i.e. a direct current to alternating current (DC/AC) converter **230** and a DC/DC converter **240**. The DC/DC converter 240 may be implemented as a bidirectional converter, but often only a unidirectional converter is implemented to supply a low voltage e.g. 12 or 24 V system from a high voltage system. The DC/DC converter 240 may be connected to a battery **250**. The battery 250 may be a low voltage battery. An AC power system or a traction system **260,** e.g. an electric motor, is coupled to the DC/AC converter 230. The DC link capacitor 220 is connected in parallel to the battery pack 210 via a pair of main contactors **211, 212.**

Before connecting the battery pack 210 to the rest of power system via the main contactors 211, 212, the DC-link capacitor 220 may be pre-charged by the DC/DC converter 240, as indicated by the dotted arrow **1,** to a desired level, e.g. 24 V. Then the main contactors 211, 212 are closed, as indicated by the dotted arrow **2,** to connect the battery pack 210 to the DC/AC converter 230 and the traction system 260 can start to operate.

**Fig. 2 (b)** shows the dis-charging using the DC/DC converter 240 in the power system 200 shown in Fig. 2(a). The main contactors 212, 212 are opened, as indicated by the dotted arrow **1,** then the DC link capacitor 220 is discharged via the DC/DC converter 240, as indicated by the arrow **2,** into a low voltage, e.g. 24V, without requiring additional hardware.

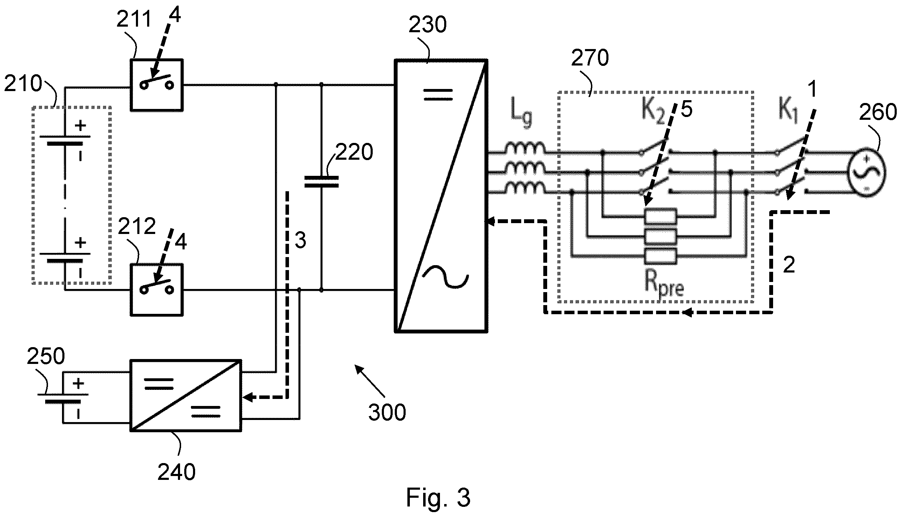

**Fig. 3** shows an example of a power system **300** comprising a pre-charge circuit. As the power system 200 shown in Fig. 2 (a), the power system 300 comprises at least one battery pack **210** comprising one or more battery cells, a DC-link capacitor **220,** an DC/AC converter **230** and a DC/DC converter **240**. The power system 300 further comprises a pre-charge circuit **270**. The DC/AC converter 230 is connected to an AC power system **260** via a first contactor **K1** and the pre-charge circuit **270**. The pre-charge circuit 270 may be a 3-phase pre-charge circuit and each phase comprises a second contactor **K2** and a resistor **Rpre.** The DC link capacitor 220 is connected in parallel to the battery pack 210 via a pair of third contactors **211, 212.**

The DC link capacitor 220 may be pre-charged to a desired DC link voltage level by the DC/DC converter 240 as shown in Fig. 2 (a). However, the DC link capacitor 220 may also be pre-charged to a desired DC link voltage level by the AC power system 260 via the DC/AC converter 230 and pre-charge circuit 270, by closing the first contactor K1 as indicated by the dotted arrow **1** and charging the DC link capacitor 220 via the DC/AC inverter 230 as indicated by the dotted arrow **2**. For example, the DC link capacitor 220 may be charged to $400 * \sqrt{2}$ V with 3-phase charging or to $230 * \sqrt{2}$ V with a single phase charging. If a higher DC link voltage level than the peak voltage level of the AC power system 260 is required, the DC/AC inverter can operate in boost mode. However, if a lower DC link voltage level than the peak voltage level of the AC power system is required, the DC link capacitor 220 can be discharged via the DC/DC converter 240 as indicated by the dotted arrow **3**. This is a very good feature as it helps to actively adjust the DC link voltage level.

After the DC link capacitor 220 has been pre-charged to the desired DC link voltage level, the pair of third contactors, i.e. the main contactors 211, 212, are then closed as indicated by the dotted arrow **4** with no or limited inrush current and the second contactor K2 are closing as indicted by the dotted arrow **5,** the power system 300 starts operation.

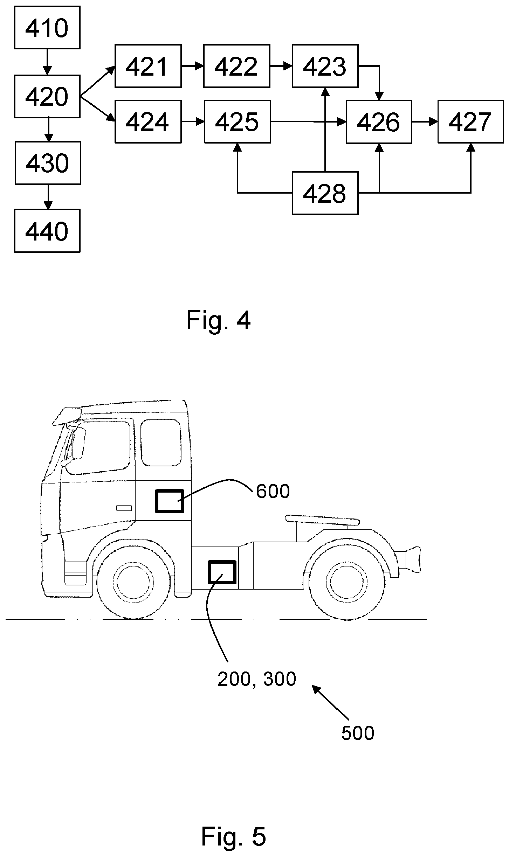

A computer implemented method for operating the power system 200, 300 will be described with reference to **Fig.4**. The method comprises at least one of the following steps or actions.

**410:** Switching off or opening the pair of third contactors 211, 212, if the pair of third contactors 211, 212 is closed.

**420:** Pre-charging the DC link capacitor 220 to a desired DC link voltage level by the DC/DC converter 240 or by the AC power system 260 via the DC/AC converter 230 and pre-charge circuit 270. When the DC link capacitor 220 is pre-charged by the AC power system 260 via the DC/AC converter 230 and pre-charge circuit 270, the method may comprise the following steps or actions:

**421:** Switching off the second contactor K2 if the second contactor K2 is closed;

**422:** Switching on the first contactor K1;

**423:** Charging the DC link capacitor 220 to a desired DC link voltage level, e.g. an operating voltage level of the AC power system 260.

The method may further comprise the following steps and actions for actively adjusting the DC link voltage level:

**424:** Operating the DC/AC converter 230 in boost mode if the required DC link voltage level is higher than the peak voltage level of the AC power system 260.

425: Charging the DC link capacitor 220 to a voltage level higher than the peak voltage level of the AC power system 260.

If the required DC link voltage level is lower than the peak voltage level of the AC power system 260, the method may further comprise the following steps or actions:

**426:** Discharging the DC link capacitor 220 by the DC/DC converter 240.

**427:** Controlling discharging of the DC link capacitor 220 via the DC/DC converter 240 to adjust the DC link voltage level.

To prevent overheating as well as preventing too quick charging rates when having a too low capacitance in the DC link, the method may further comprise the following steps or actions:

**428:** Controlling charging and discharging rate of the DC link capacitor 220.

**430:** Switching on the pair of third contactors 211, 212 after the DC link capacitor 220 has been charged and adjusted to the desired DC link voltage level.

**440:** Switching on the second contactor K2 to start operation of the power system 300.

To summarize, the power system 200, 300 has improved pre-charging and discharging functions compared to the existing solutions. The power system 200, 300 is configured to pre-charge the DC link capacitor 220 to a desired DC link voltage level by the DC/DC converter 240 or by the AC power system 260 via the DC/AC converter 230 and pre-charge circuit 270 before starting the operation of the power system 200, 300. The charge rate may be actively controlled without overheating limitations as for the existing solutions as well as preventing too quick charging rates when having a too low capacitance in the DC link. No additional hardware is needed and pre-charging and dis-charging may be integrated as a software function if a bidirectional DC/DC converter is already utilized in the power system. The power system 200, 300 may be scaled for EVs with large multi-battery systems and large multi-motor systems.

The power system 200, 300 may be configured to discharge the DC link capacitor 220 via the DC/DC converter 240. The DC/DC converter 240 may be a unidirectional or bidirectional converter. The power system 200, 300 may be configured to actively adjust the DC link voltage level by controlling discharging of the DC link capacitor 220 via the DC/DC converter 240 depending on different DC link voltage level requirements for various power system applications. The power system 200, 300 may be configured to operate the DC/AC converter 230 in boost mode when a higher DC link voltage level is needed than the peak voltage level of the AC power system. The power system 200, 300 may be configured to control charging and discharging rate of the DC link capacitor 220.

The power system 200, 300 may be implemented in various power systems, such as a renewable energy system, a high-voltage direct current (HVDC) transmission system, an electrical energy storage system etc.

The power system 200, 300 may be implemented in a motor drive system of a vehicle. **Fig.5** shows a vehicle 500 in which the power system 200, 300 may be implemented. The vehicle 500 comprises a power system 200, 300 as described above.

The vehicle 500 may be a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle 500 may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 500 may be operated by a user (not shown) and/or be at least partly automatically driven, i.e., it may be a vehicle comprising autonomous driving capabilities. The vehicle 500 may be a fully electric vehicle or a hybrid vehicle or a vehicle driven only by a combustion engine. As such, the vehicle 500 may comprise one or more electric motors/generators and/or an internal combustion engine for driving the vehicle 500.

The term vehicle will be used herein when referring to any of the above types of vehicles.

The method for operating the power system 200, 300 may be implemented in a computer system.

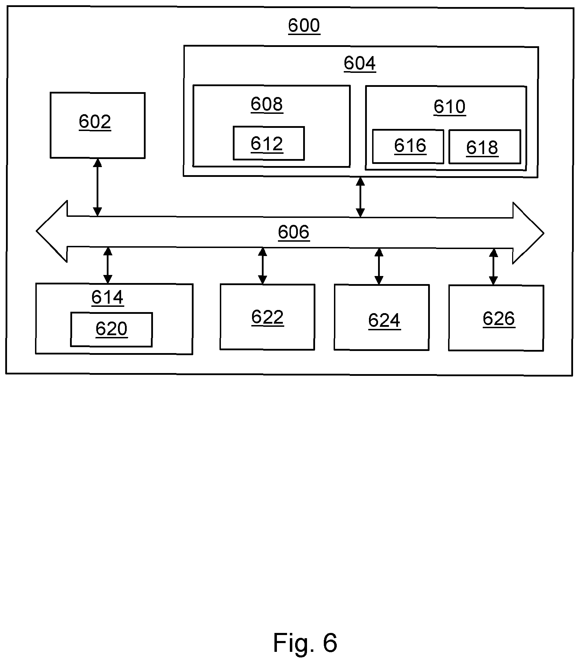

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The computer system 600 may be implemented in the vehicle 500.

**Some examples:**

1. A power system (200, 300) comprising:

at least one battery pack (210) comprising at least one battery cell;
a direct current to alternating current, DC/AC, converter (230), wherein the DC/AC converter (230) is connected to a traction system (260) or an AC power system via a first contactor (K1) and a pre-charge circuit (270) comprising a second contactor (K2) and a resistor (Rpre);
a DC link capacitor (220) connected in parallel to the at least one battery pack (210) via a pair of third contactors (211, 212);
a direct current to direct current, DC/DC, converter (240), wherein outputs of the DC/DC converter (240) are connected to the DC link capacitor (220), inputs of the DC/DC converter (240) are connected to a battery (250); and wherein the power system (200, 300) is configured to pre-charge the DC link capacitor (220) to a desired DC link voltage level by the DC/DC converter (240) or by the AC power system (260) via the DC/AC converter (230) and pre-charge circuit.

2. The power system (200, 300) according to Example 1, wherein the power system (200, 300) is further configured to discharge the DC link capacitor (220) via the DC/DC converter (240).

3. The power system (200, 300) according to any one of Examples 1-2, wherein the DC/DC converter (240) is a unidirectional or bidirectional converter.

4. The power system (200, 300) according to any one of Examples 1-3, wherein the power system (200, 300) is further configured to actively adjust the DC link voltage level by controlling discharging of the DC link capacitor (220) via the DC/DC converter (240).

5. The power system (200, 300) according to any one of Examples 1-4, wherein the power system (200, 300) is further configured to operate the DC/AC converter (230) in boost mode.

6. The power system (200, 300) according to any one of Examples 1-5, wherein the power system (200, 300) is further configured to control charging and discharging rate of the DC link capacitor (220).

7. The power system (200, 300) according to any one of Examples 1-6, wherein the power system (200, 300) is implemented in any one of a renewable energy system, a high-voltage direct current, HVDC, transmission system, an electrical energy storage system.

8. The power system (200, 300) according to any one of Examples 1-6, wherein the power system (200, 300) is implemented in a motor drive system of a vehicle (500).

9. A vehicle (500) comprises a power system (200, 300) according to any one of Examples 1-6.

10. A computer implemented method for operating a power system (200, 300), wherein the power system (200, 300) comprises:

at least one battery pack (210) comprising at least one battery cell;
a direct current to alternating current, DC/AC, converter (230), wherein the DC/AC converter (230) is connected to a traction system or an AC power system (260) via a first contactor (K1) and a pre-change circuit (270) comprising a second contactor (K2) and a resistor (Rpre);
a DC link capacitor (220) connected in parallel to the battery pack (210) via a pair of third contactors (211, 212);
a direct current to direct current, DC/DC, converter (240), wherein outputs of the DC/DC converter (240) are connected to the DC link capacitor (220), inputs of the DC/DC converter (240) are connected to a battery (250); and
wherein the method comprises: pre-charging (420) the DC link capacitor (220) to a desired DC link voltage level by the DC/DC converter (240) or by the AC power system (260) via the DC/AC converter (230) and pre-charge circuit (270).

11. The method according to Example 10, wherein pre-charging (420) the DC link capacitor (220) by the AC power system (260) via the DC/AC converter (230) and pre-charge circuit (270) further comprises:

switching off (421) the second contactor (K2);
switching on (422) the first contactor (K1);
charging (423) the capacitor (220) to the desired DC link voltage level.

12. The method according to Example 11, further comprising:

operating (424) the DC/AC converter (230) in boost mode;
charging (425) the DC link capacitor (220) to a voltage level higher than an operating voltage level of the AC power system (260).

13. The method according to any one of Examples 11-12, further comprising:
discharging (426) the DC link capacitor (220) by the DC/DC converter (240).

14. The method according to Example 13, further comprising:
controlling (427) discharging of the DC link capacitor (230) via the DC/DC converter (240) to adjust the DC link voltage level.

15. The method according to any one of Examples 10-14, further comprising:
controlling (428) charging and discharging rate of the DC link capacitor (220).

16. A computer system (600) comprising processing circuitry (602) configured to perform the method according to any one of Examples 10-15.

17. A vehicle (500) comprising the computer system (600) of Example 16.

18. A computer program product comprising program code (620) for performing, when executed by the processing circuitry (602), the method of any one of Examples 10-15.

19. A non-transitory computer-readable storage medium (614) comprising instructions, which when executed by the processing circuitry (602), cause the processing circuitry to perform the method of any one of Examples 10-15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A power system (200, 300) comprising:

   at least one battery pack (210) comprising at least one battery cell;
   a direct current to alternating current, DC/AC, converter (230), wherein the DC/AC converter (230) is connected to a traction system or an AC power system (260) via a first contactor (K1) and a pre-charge circuit (270) comprising a second contactor (K2) and a resistor (Rpre);
   a DC link capacitor (220) connected in parallel to the at least one battery pack (210) via a pair of third contactors (211, 212);
   a direct current to direct current, DC/DC, converter (240), wherein outputs of the DC/DC converter (240) are connected to the DC link capacitor (220), inputs of the DC/DC converter (240) are connected to a battery (250); and wherein the power system (200, 300) is configured to pre-charge the DC link capacitor (220) to a desired DC link voltage level by the DC/DC converter (240) or by the AC power system (260) via the DC/AC converter (230).

2. The power system (200, 300) according to claim 1, wherein the power system (200, 300) is further configured to discharge the DC link capacitor (220) via the DC/DC converter (240).

3. The power system (200, 300) according to any one of claims 1-2, wherein the DC/DC converter (240) is a unidirectional or bidirectional converter.

4. The power system (200, 300) according to any one of claims 1-3, wherein the power system (200, 300) is further configured to actively adjust the DC link voltage level by controlling discharging of the DC link capacitor (220) via the DC/DC converter (240).

5. The power system (200, 300) according to any one of claims 1-4, wherein the power system (200, 300) is further configured to operate the DC/AC converter (230) in boost mode.

6. The power system (200, 300) according to any one of claims 1-5, wherein the power system (200, 300) is further configured to control charging and discharging rate of the DC link capacitor (220).

7. The power system (200, 300) according to any one of claims 1-6, wherein the power system (200, 300) is implemented in any one of a motor drive system of a vehicle, a renewable energy system, a high-voltage direct current, HVDC, transmission system, or an energy storage system.

8. A vehicle (500) comprises a power system (200, 300) according to any one of claims 1-6.

9. A computer implemented method for operating a power system (200, 300), wherein the power system (200, 300) comprises:

   at least one battery pack (210) comprising at least one battery cell;
   a direct current to alternating current, DC/AC, converter (230), wherein the DC/AC converter (230) is connected to a traction system or an AC power system (260) via a first contactor (K1) and a pre-change circuit (270) comprising a second contactor (K2) and a resistor (Rpre);
   a DC link capacitor (220) connected in parallel to the battery pack (210) via a pair of third contactors (211, 212);
   a direct current to direct current, DC/DC, converter (240), wherein outputs of the DC/DC converter (240) are connected to the DC link capacitor (220), inputs of the DC/DC converter (240) are connected to a battery (250); and wherein the method comprises:
   pre-charging (420) the DC link capacitor (220) to a desired DC link voltage level by the DC/DC converter (240) or by the AC power system (260) via the DC/AC converter (230) and pre-charge circuit (270).

10. The method according to claim 9, wherein pre-charging (420) the DC link capacitor (220) by the AC power system (260) via the DC/AC converter (230) and pre-charge circuit further comprises:

    switching off (421) the second contactor (K2);
    switching on (422) the first contactor (K1);
    charging (423) the DC link capacitor (220) to the desired DC link voltage level.

11. The method according to claim 10, further comprising:

    operating (424) the DC/AC converter (230) in boost mode;
    charging (425) the DC link capacitor (220) to a voltage level higher than the operating voltage level of the AC power system (260).

12. The method according to any one of claims 9-11, further comprising any one or a combination of the following:

discharging (426) the DC link capacitor (220) by the DC/DC converter (240);
controlling (427) discharging of the DC link capacitor (220) via the DC/DC converter (240) to adjust the DC link voltage level;
controlling (428) charging and discharging rate of the DC link capacitor (220).

13. A computer system (600) comprising processing circuitry (602) configured to perform the method according to any one of claims 9-12.

14. A vehicle (500) comprising the computer system (600) of claim 13.

15. A computer program product comprising program code (620) for performing, when executed by the processing circuitry (602), the method of any one of claims 9-12.

**Amended claims in accordance with Rule 137(2) EPC.**

1. A power system (200, 300) comprising:

at least one first battery pack (210) comprising at least one battery cell;
a direct current to alternating current, DC/AC, converter (230), wherein the DC/AC converter (230) is connected to a traction system or an AC power system (260) via a first contactor (K1) and a pre-charge circuit (270) comprising a second contactor (K2) and a resistor (Rpre) connected in parallel, and wherein the first contactor (K1) is connected in series with the pre-charge circuit (270);
a DC link capacitor (220) connected in parallel to the at least one first battery pack (210) via a pair of third contactors (211, 212);
a direct current to direct current, DC/DC, converter (240), wherein outputs of the DC/DC converter (240) are connected to the DC link capacitor (220), inputs of the DC/DC converter (240) are connected to a second battery (250); and wherein
the power system (200, 300) is configured to pre-charge the DC link capacitor (220) to a desired DC link voltage level by the AC power system (260) via the DC/AC converter (230).

2. The power system (200, 300) according to claim 1, wherein the power system (200, 300) is further configured to pre-charge and discharge the DC link capacitor (220) via the DC/DC converter (240).

3. The power system (200, 300) according to any one of claims 1-2, wherein the DC/DC converter (240) is a unidirectional or bidirectional converter.

4. The power system (200, 300) according to any one of claims 2-3, wherein the power system (200, 300) is further configured to actively adjust the DC link voltage level by controlling discharging of the DC link capacitor (220) via the DC/DC converter (240).

5. The power system (200, 300) according to any one of claims 1-4, wherein the power system (200, 300) is further configured to operate the DC/AC converter (230) in boost mode.

6. The power system (200, 300) according to any one of claims 1-5, wherein the power system (200, 300) is further configured to control charging and discharging rate of the DC link capacitor (220).

7. The power system (200, 300) according to any one of claims 1-6, wherein the power system (200, 300) is implemented in any one of a motor drive system of a vehicle, a renewable energy system, a high-voltage direct current, HVDC, transmission system, or an energy storage system.

8. A vehicle (500) comprises a power system (200, 300) according to any one of claims 1-6.

9. A computer implemented method for operating a power system (200, 300), wherein the power system (200, 300) comprises:

at least one first battery pack (210) comprising at least one battery cell;
a direct current to alternating current, DC/AC, converter (230), wherein the DC/AC converter (230) is connected to a traction system or an AC power system (260) via a first contactor (K1) and a pre-change circuit (270) comprising a second contactor (K2) and a resistor (Rpre) connected in parallel, and wherein the first contactor (K1) is connected in series with the pre-charge circuit (270);
a DC link capacitor (220) connected in parallel to the battery pack (210) via a pair of third contactors (211, 212);
a direct current to direct current, DC/DC, converter (240), wherein outputs of the DC/DC converter (240) are connected to the DC link capacitor (220), inputs of the DC/DC converter (240) are connected to a second battery (250); and wherein the method comprises:

pre-charging (420) the DC link capacitor (220) to a desired DC link voltage level by the AC power system (260) via the DC/AC converter (230) and pre-charge circuit (270).

10. The method according to claim 9, wherein pre-charging (420) the DC link capacitor (220) by the AC power system (260) via the DC/AC converter (230) and pre-charge circuit further comprises:

switching off (421) the second contactor (K2);
switching on (422) the first contactor (K1);
charging (423) the DC link capacitor (220) to the desired DC link voltage level.

11. The method according to claim 10, further comprising:

operating (424) the DC/AC converter (230) in boost mode;
charging (425) the DC link capacitor (220) to a voltage level higher than the operating voltage level of the AC power system (260).

12. The method according to any one of claims 9-11, further comprising any one or a combination of the following:

discharging (426) the DC link capacitor (220) by the DC/DC converter (240);
controlling (427) discharging of the DC link capacitor (220) via the DC/DC converter (240) to adjust the DC link voltage level;
controlling (428) charging and discharging rate of the DC link capacitor (220).

13. A computer system (600) comprising processing circuitry (602) configured to perform the method according to any one of claims 9-12.

14. A vehicle (500) comprising the computer system (600) of claim 13.

15. A computer program product comprising program code (620) for performing, when executed by the processing circuitry (602), the method of any one of claims 9-12.

Fig. 1

Fig. 2 (a)

Fig. 2 (b)

Fig. 3

EP 4 775 437 A1

Fig. 4

Fig. 5

Fig. 6

Europäisches
Patentamt
European
Patent Office
Office européen
des brevets

# EUROPEAN SEARCH REPORT

**Application Number**

**EP 25 15 1437**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2013 225884 A1 (VOLKSWAGEN AG [DE]) 18 June 2015 (2015-06-18) <br> * figures 1,2,4a,4b * <br> * paragraphs [0034], [0035], [0037] * | 1-15 | INV. <br> B60L50/51 <br> B60L58/20 <br> H02J7/34 |
| X | DE 10 2020 007368 A1 (DAIMLER AG [DE]) 28 January 2021 (2021-01-28) <br> * paragraphs [0001], [0031] - [0033], [0046] - [0047] * <br> * figures 1,3 * | 1,3,8,9, 13-15 | |
| X | WO 2024/160465 A1 (EATON INTELLIGENT POWER LTD [IE]) 8 August 2024 (2024-08-08) <br> * paragraphs [0004], [0005], [0014], [0021] * <br> * figures 2,3 * | 1,3,8,9, 13-15 | |
| A | US 2023/318467 A1 (MOBARREZ MAZIAR [US] ET AL) 5 October 2023 (2023-10-05) <br> * figures 1, 2 * <br> * paragraph [0040] * | 1-15 | |
| | | | TECHNICAL FIELDS SEARCHED (IPC) |
| A | US 2017/087998 A1 (MINAMII TOSHIHIKO [JP] ET AL) 30 March 2017 (2017-03-30) <br> * figure 1 * <br> * paragraph [0067] * | 1-15 | B60L <br> H02J |
| A | US 2015/229143 A1 (KAITA KEIJI [JP] ET AL) 13 August 2015 (2015-08-13) <br> * figures 1,2 * <br> * paragraphs [0019], [0022] * | 5,11 | |

The present search report has been drawn up for all claims

| Place of search | Date of completion of the search | Examiner |
|---|---|---|
| The Hague | 3 July 2025 | Herrera Caballero, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 1437

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2025

| Patent document cited in search report | Publication date | Patent family member(s) | | Publication date |
|---|---|---|---|---|
| DE 102013225884 A1 | 18-06-2015 | DE 102013225884 A1 | | 18-06-2015 |
| | | EP 3079941 A1 | | 19-10-2016 |
| | | WO 2015086179 A1 | | 18-06-2015 |
| DE 102020007368 A1 | 28-01-2021 | NONE | | |
| WO 2024160465 A1 | 08-08-2024 | NONE | | |
| US 2023318467 A1 | 05-10-2023 | CN 116827130 A | | 29-09-2023 |
| | | DE 102022130991 A1 | | 28-09-2023 |
| | | US 2023318467 A1 | | 05-10-2023 |
| US 2017087998 A1 | 30-03-2017 | CN 106945534 A | | 14-07-2017 |
| | | JP 2017063555 A | | 30-03-2017 |
| | | US 2017087998 A1 | | 30-03-2017 |
| US 2015229143 A1 | 13-08-2015 | JP 5673657 B2 | | 18-02-2015 |
| | | JP 2014110683 A | | 12-06-2014 |
| | | US 2015229143 A1 | | 13-08-2015 |
| | | WO 2014087213 A1 | | 12-06-2014 |

EPO FORM P0459

For more details about this annex : see Official Journal of the European Patent Office, No. 12/82